# EUROPÄISCHE PATENTSCHRIFT

(11) **EP 2 776 365 B1**
(45) Veröffentlichungstag und Bekanntmachung des Hinweises auf die Patenterteilung: **17.10.2018**
(21) Anmeldenummer: 12784569.1
(22) Anmeldetag: 07.11.2012
(51) Int. Cl.: B01J 8/00, C01B 3/38, B01J 8/06

(54) **REFORMERROHR MIT INTERNEM WÄRMEAUSTAUSCH**
REFORMER TUBE HAVING INTERNAL HEAT EXCHANGE
TUBE DE REFORMAGE À ÉCHANGE DE CHALEUR INTERNE

(30) Priorität: 11.11.2011 DE 102011118217
(43) Veröffentlichungstag der Anmeldung: 17.09.2014
(73) Patentinhaber: L'Air Liquide Société Anonyme pour l'Etude et l'Exploitation des Procédés Georges Claude, 75007 Paris (FR); Air Liquide Global E&C Solutions Germany GmbH, 60439 Frankfurt am Main (DE)
(72) Erfinder: SCHLICHTING, Holger, 65719 Hofheim (DE); WOLF, Ulrich, 63329 Egelsbach (DE); POHL, Sven, 60388 Frankfurt am Main (DE); ULBER, Dieter, 61449 Steinbach (DE); ZOLNOWSKI, Udo, 35440 Linden (DE); COSCIA, Antonio, 61476 Kronberg (DE); CANCES, Julien, F-91140 Villebon-sur-Yvette (FR); CAMY-PEYRET, Frederic, F-75007 Paris (FR); MATHEY, Fabrice, F-78470 St-Remy les Chevreuse (FR)
(74) Vertreter: KNH Patentanwälte Neumann Heine Taruttis PartG mbB
(86) Internationale Anmeldenummer: PCT/EP2012/072050
(87) Internationale Veröffentlichungsnummer: WO 2013/068416

(56) Entgegenhaltungen:
- DE-A1- 3 806 536
- US-A- 3 442 618
- HIGMAN C ED - BRENDENG E ET AL: "Synthesis gas processes for synfuels production", EUROGAS '90 : PROCEEDINGS, TAPIR PUBL, 28. Mai 1990 (1990-05-28), Seiten 1-10, XP002635271, ISBN: 978-82-519-1031-6 [gefunden am 1990-06-01] in der Anmeldung erwähnt

## Beschreibung

### Gebiet der Erfindung

Die Erfindung betrifft ein Reformerrohr zur Umwandlung kohlenwasserstoffhaltiger Einsatzstoffe, vorzugsweise Erdgas und leichte flüssige Kohlenwasserstoffe wie Naphtha, in ein Kohlenoxide und Wasserstoff enthaltendes Synthesegasprodukt. Das erfindungsgemäße Reformerrohr ermöglicht einen internen Wärmeaustausch zwischen dem Einsatzgas und dem zu Synthesegasprodukten teilumgesetzten Produktgas, wodurch sich Vorteile hinsichtlich des Energieverbrauchs bei der Herstellung von Synthesegas und der Wertprodukte Wasserstoff und Kohlenmonoxid ergeben. Die Erfindung betrifft ferner ein Verfahren zur Herstellung von Synthesegas durch Dampfreformierung kohlenwasserstoffhaltiger Einsatzstoffe unter Verwendung des erfindungsgemäßen Reformerrohres, sowie einen mit dem Reformerrohr ausgestatteten Reformerofen.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird daher in einem Reformerofen durchgeführt, in dem zahlreiche, Katalysator enthaltende Reformerrohre parallel angeordnet sind, in denen die Dampfreformierungsreaktion abläuft. Die Außenwände des Reformerofens sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 800 °C in die Reformerrohre ein und wird dort am Reformierungskatalysator zu Kohlenmonoxid und Wasserstoff umgesetzt. Verbreitet sind Reformierungskatalysatoren auf Nickelbasis. Während höhere Kohlenwasserstoffe vollständig zu Kohlenmonoxid und Wasserstoff umgesetzt werden, erfolgt im Falle des Methans üblicherweise ein Teilumsatz. Die Zusammensetzung des Produktgases wird dabei vom Reaktionsgleichgewicht bestimmt; das Produktgas enthält daher neben Kohlenmonoxid und Wasserstoff auch noch Kohlendioxid, nicht umgesetztes Methan sowie Wasserdampf. Zur Energieoptimierung oder bei Einsatzstoffen mit höheren Kohlenwasserstoffen kann nach dem Vorerhitzer ein sogenannter Prereformer zur Vorspaltung des Einsatzstoffes eingesetzt werden. Der vorgespaltene Einsatzstoff wird dann in einem weiteren Erhitzer auf die gewünschte Reformerrohreintrittstemperatur erhitzt.

Das heiße Synthesegas-Produktgas wird nach Verlassen des Reformerofens in einem oder mehreren Wärmetauschern teilabgekühlt. Das teilabgekühlte Synthesegas-Produktgas durchläuft anschließend noch weitere Konditionierungsschritte, die von der Art des gewünschten Produktes oder des nachgeschalteten Verfahrens anhängig sind.
Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EUROGAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Berechnungen und Betriebsversuche haben gezeigt, dass bei einer typischen Eintrittstemperatur von 450 °C in das Katalysatorbett und bei einer typischen Austrittstemperatur von 860 °C aus dem Katalysatorbett bis zu 20 % der für die Dampfspaltung benötigten Energie durch den internen Wärmeaustausch zu der Dampfreformierung zurückgeführt werden können. Ferner werden bis zu 15 % Investitionskosten eingespart, da die Konvektionsstrecke im Reformerofen kleiner gestaltet werden kann und weniger Reformerrohre benötigt werden. Nachteilig ist hierbei allerdings der höhere Druckverlust aufgrund der längeren Leitungsstrecke des Gases durch die wendelförmig ausgestalteten Wärmetauscherrohre. Ferner macht sich eine als "metal dusting" bezeichnete Korrosion stärker bemerkbar, die nachfolgend kurz erläutert wird, da längere Abschnitte der Wärmetauscherrohre dem für die "metal dusting"-Korrosion relevanten Temperaturbereich ausgesetzt sind.

Bei vielen Synthesegaserzeugungsanlagen treten bei höheren Gastemperaturen, insbesondere im Bereich von 820° C bis hinunter zu 520° C in den Gaserzeugungsanlagen selbst und in den diesen nachgeschalteten Wärmetauschern Korrosionsprobleme an den verwendeten metallischen Werkstoffen auf, wenn ein gewisses CO₂/CO/H₂O-Verhältnis erreicht wird. Dies gilt sowohl für ferritische als auch für austenitische Stähle. Diese unter dem Begriff "metal dusting" bekannte Materialabtragung führt zu einer Aufzehrung bzw. Zerstörung des Materials und es bestehen nur beschränkte Möglichkeiten, über Materialzusammensetzung dieser Korrosion zu widerstehen.

Aus der US 3,442,618 ist ein Verfahren zur Herstellung von Wasserstoff aus Wasserstoff- und kohlenstoffhaltigen Rohmaterialien bekannt. Dabei wird ein erhitzter Strom aus dem Rohmaterial und Wasser durch einen Katalysator geleitet.

Weiterhin sind aus der DE 38 06 536 A1 ein Verfahren und eine Vorrichtung zum Erzeugen von Wasserstoff bekannt. Die Vorrichtung umfasst einen Reaktionsabschnitt, innerhalb dessen ein oder mehrere Katalysatorbehälter mit einer Mehrzahl von schraubenlinienförmig gewundenen oder gewickelten Rohren angeordnet sind.

### Beschreibung der Erfindung

Die Aufgabe der vorliegenden Erfindung besteht daher darin, ein Reformerrohr anzugeben, das günstige Eigenschaften bezüglich der Energierückgewinnung mittels internem Wärmeaustausch aufweist, bei dem aber gleichzeitig der Druckverlust und die Korrosionsanfälligkeit minimiert sind.

Die vorstehend genannte Aufgabe wird mit der Erfindung gemäß Anspruch 1 mit einem Reformerrohr zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen gelöst, umfassend
(a) ein äußeres, an einem Rohrende offenes und an dem entgegengesetzten Rohrende verschlossenes Rohr, wobei das äußere Rohr eine Schüttung eines für die Dampfreformierung aktiven, festen Katalysators enthält und von außen beheizt wird,
(b) einen Eintritt für den den Einsatzstoff enthaltenden Einsatzgasstrom, wobei der Eintritt des Einsatzgasstroms an dem offenen Rohrende angeordnet ist und in Fluidverbindung mit der Katalysatorschüttung steht,
(c) mindestens ein helixförmig gewendeltes, innerhalb der Katalysatorschüttung angeordnetes Wärmetauscherrohr, dessen Eintrittsende in Fluidverbindung mit der Katalysatorschüttung steht und dessen Austrittsende in Fluidverbindung mit dem Austritt für den Synthesegasproduktstrom steht, wobei das Wärmetauscherrohr in Wärmeaustauschbeziehung mit der Katalysatorschüttung und dem durch sie strömenden Einsatzgasstrom steht,
(d) einen Austritt für den Synthesegasproduktstrom, wobei der Austritt an dem offenen Rohrende angeordnet ist und in Fluidverbindung mit dem Austrittsende des Wärmetauscherrohres, aber nicht in Fluidverbindung mit dem Eintritt für den Einsatzgasstrom steht,
wobei der Einsatzgasstrom zunächst die Katalysatorschüttung und nachfolgend im Gegenstrom das Wärmetauscherrohr durchströmt, dadurch gekennzeichnet, dass das Wärmetauscherrohr auf einem Teil seiner innerhalb der Katalysatorschüttung befindlichen Länge gewendelt ist, dass sich die Wendelsteigung innerhalb der Katalysatorschüttung ändert. Es ist bevorzugt, dass das Wärmetauscherrohr ansonsten gerade verläuft.

Unter Fluidverbindung zwischen zwei Bereichen des Reformerrohres wird dabei jegliche Art von Verbindung verstanden, die es ermöglicht, dass ein Fluid, beispielsweise der Einsatzgasstrom oder der Synthesegasproduktstrom, von dem einen zu dem anderen der beiden Bereiche strömen kann, unbeachtlich etwaiger zwischengeschalteter Bereiche oder Bauteile. Mit Wärmeaustauschbeziehung ist die Möglichkeit des Wärmeaustauschs oder der Wärmeübertragung zwischen zwei Bereichen des Reformerrohres gemeint, wobei alle Mechanismen des Wärmeaustauschs oder der Wärmeübertragung wie Wärmeleitung, Wärmestrahlung oder konvektiver Wärmetransport zum Tragen kommen können.

Das offene Rohrende des äußeren Rohres zeichnet sich dadurch aus, dass beim Betrieb des Reformerrohres sämtliche Stoffströme durch dieses hindurchgeführt werden, während durch das verschlossene Rohrende keinerlei Stoffströme ein- oder ausgeleitet werden. Die Zuleitung für den Einsatzgasstrom und die Ableitung für den Synthesegasproduktstrom befinden sich daher an dem offenen Rohrende. Selbstverständlich wird das offene Rohrende beim Betrieb des Reformerrohres mit einer Verschlussvorrichtung, beispielsweise einem aufgeflanschten Deckel, verschlossen.

Weitere vorteilhafte Ausgestaltungen des erfindungsgemäßen Reformerrohres finden sich in den Unteransprüchen 2 bis 9.

Die Erfindung betrifft auch einen Reformerofen, umfassend feuerfest ausgekleidete oder feuerfest zugestellte Wände, eine Decke und einen Boden und einen dadurch gebildeten Innenraum, dadurch gekennzeichnet, dass mindestens ein erfindungsgemäßes Reformerrohr gemäß Anspruch 1 bis 9 und mindestens ein Brenner zur Beheizung des Reformerrohrs in dem Innenraum oder in einem mit dem Innenraum bezüglich der Brennerrauchgase in Fluidverbindung stehenden Nebenraum angeordnet sind.

Ferner betrifft die Erfindung auch ein Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines den Einsatzstoff enthaltenden Einsatzgasstroms und Zugabe von Reformierungsdampf,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts, dadurch gekennzeichnet, dass das katalytische Umsetzen in Schritt (b) in einem erfindungsgemäßen Reformerrohr nach Anspruch 1 bis 9 erfolgt.

Der Erfindung liegt die Erkenntnis zugrunde, dass sowohl der Druckverlust als auch die Empfindlichkeit gegenüber der "metal dusting"-Korrosion in Beziehung zu der Gesamtlänge der Leitungsstrecke des teilumgesetzten Einsatzgases, das bereits Kohlenoxide und Wasserstoff enthält, durch die Wärmetauscherrohre steht. Die Gesamtlänge der Leitungsstrecke durch die Wärmetauscherrohre kann dabei durch folgende Maßnahmen verringert werden:
(1) Das innerhalb der Katalysatorschüttung angeordnete Wärmetauscherrohr wird nicht auf seiner gesamten Länge gewendelt ausgeführt, sondern umfasst auch einen gerade verlaufenden, nicht gewendelten Anteil,
(2) bei dem innerhalb der Katalysatorschüttung angeordneten Wärmetauscherrohr weisen die in dem gewendelten Bereich aufeinanderfolgenden Windungen nicht einen konstanten Abstand voneinander, sondern an mindestens einer Stelle einen geänderten Abstand auf. Denkbar ist auch eine kontinuierliche Abstandsänderung zwischen je zwei aufeinanderfolgenden Windungen. Dies hat zur Folge, dass sich entsprechend die Wendelsteigung an mindestens einer Stelle oder auch kontinuierlich ändert, wobei eine größere Wendelsteigung einem vergrößerten Windungsabstand entspricht.

Beide Maßnahmen können jeweils getrennt oder auch in Kombination miteinander angewendet werden und lösen die der Erfindung zugrunde liegende Aufgabe. Überraschenderweise zeigte sich, dass der Druckverlust und die Empfindlichkeit gegenüber der "metal dusting"-Korrosion zwar signifikant abnehmen, die Wärmeübertagungseigenschaften gleichzeitig aber nur moderat verringert werden, wenn bei dem erfindungsgemäßen Reformerrohr das Wärmetauscherrohr nur auf einem Teil seiner innerhalb der Katalysatorschüttung befindlichen Länge gewendelt ist und ansonsten gerade verläuft und/oder wenn sich die Wendelsteigung innerhalb der Katalysatorschüttung ändert.

### Bevorzugte Ausgestaltungen der Erfindung

Bevorzugt wird bei dem erfindungsgemäßen Reformerrohr der gewendelte Anteil des Wärmetauscherrohres und/oder die Änderung der Wendelsteigung innerhalb der Katalysatorschüttung so gewählt, dass bei festgelegtem Einsatzgasstrom und Temperatur des Einsatzgases am Eintritt die Austrittstemperatur oberhalb des für die Metallkorrosion durch "metal dusting" aktiven Temperaturbereichs liegt. Der ungefähre Bereich, in dem diese Art der Metallkorrosion auftreten kann, ist bereits eingangs genannt worden. Er hängt aber auch von der genauen Zusammensetzung des Synthesegasproduktes und somit von den genauen Reaktionsbedingungen bei der Dampfreformierung ab. Der Fachmann kann durch die Durchführung von Routineversuchen zur "metal dusting"-Korrosion die für die betrachtete Synthesegaszusammensetzung zu wählende, obere Grenztemperatur bestimmen und somit den gewendelten Anteil bzw. die Wendelsteigung des Wärmetauscherrohres so festlegen, dass die Austrittstemperatur des Synthesegasproduktstrom aus dem Reformerrohr bei festgelegten Bedingungen am Eintritt in das Reformerrohr sicher oberhalb dieser Grenztemperatur liegt.

Bevorzugt wird ferner, dass der gewendelte Anteil des Wärmetauscherrohres und/oder die Änderung der Wendelsteigung innerhalb der Katalysatorschüttung so gewählt wird, dass bei festgelegtem Einsatzgasstrom und Temperatur des Einsatzgases am Eintritt der Druckverlust zwischen Eintritt und Austritt unter einem festgelegten Höchstwert liegt. Auch hier kann der Fachmann einen geeigneten oberen Grenzwert für den tolerierbaren Druckverlust auswählen. Er hängt im Wesentlichen von den Randbedingungen der betrachteten Anlage ab, beispielsweise von den Druckanforderungen der dem Reformer nachgeschalteten Konditionierungs- bzw. Verarbeitungsstufen des Synthesegasprodukts.

Erfindungsgemäß ist der gewendelte Anteil des Wärmetauscherrohres in der Nähe des Austrittsendes des Wärmetauscherrohres angeordnet. In diesem Bereich des Reformerrohres findet der Hauptanteil der Dampfreformierungsreaktion statt, so dass aufgrund des endothermen Reaktionsverlaufs die dort lokal benötigte Energie besonders hoch ist. Ein verbesserter Wärmeübergang durch eine vergrößerte Wärmeaustauschfläche führt daher an dieser Stelle zu einem besonders deutlichen Einsparpotenzial für Fremdenergie. Dieser Effekt kann noch dadurch verstärkt werden, dass die Wendelsteigung des Wärmetauscherrohres zum Austrittsende des Wärmetauscherrohres hin abnimmt, da dann in einem Bereich höheren Energiebedarfs mehr Windungen, und somit eine höhere Wärmeaustauschfläche vorhanden ist als in einem Bereich niedrigeren Energiebedarfs. Wenn diese Abnahme der Wendelsteigung in Richtung auf das Austrittsende des Wärmetauscherrohres hin kontinuierlich erfolgt, werden die lokal unterschiedlichen Energiebedarfe der Dampfreformierungsreaktion besonders gut angenähert.

Als besonders günstig hat es sich erwiesen, dass das Wärmetauscherrohr auf einem Anteil von höchstens 90 % seiner innerhalb der Katalysatorschüttung befindlichen Länge gewendelt ist. Dies wird in der nachfolgenden Diskussion von Ausführungs- und Zahlenbeispielen weiter erläutert.

Eine vorteilhafte Ausgestaltung des erfindungsgemäßen Reformerrohres sieht vor, innerhalb des äußeren Rohrs an dem verschlossenen Rohrende einen Freiraum anzuordnen, der von der Katalysatorschüttung durch eine gasdurchlässige Trennvorrichtung, beispielsweise eine Fritte, ein Gitter oder ein Lochblech abgetrennt ist, wobei in den Freiraum das Eintrittsende des Wärmetauscherrohres bzw. der Wärmetauscherrohre hineinragt und wobei der Freiraum in Fluidverbindung mit der Katalysatorschüttung und dem Wärmetauscherrohr steht. Es hat sich gezeigt, dass ein solcher Freiraum die Wärmetauscherrohre in effizienter Weise vor Verschmutzung oder Verstopfung beispielsweise durch Katalysatorabrieb schützt, da hier die Strömungsrichtung der Gasströmung umgekehrt wird, so dass sich die abgeriebenen Katalysatorpartikel in dem Freiraum sammeln und von dem Eintrittsende des Wärmetauscherrohres ferngehalten werden. Die Trennvorrichtung dient auch der Zentrierung und Halterung der Wärmetauscherrohre und erhöht die mechanische Stabilität des Reformerrohres.

Besonders bevorzugt wird es, dass das erfindungsgemäße Reformerrohr mit zwei Wärmetauscherrohren ausgestattet ist, die in Form einer Doppelhelix in der Katalysatorschüttung angeordnet sind. Diese Ausgestaltung des Reformerrohr stellt einen günstigen Kompromiss zwischen apparativem Aufwand und günstigen Wärmeübertragungseigenschaften dar.

In weiterer bevorzugter Ausgestaltung mündet das Austrittsende des Wärmetauscherrohres in einen ausgemauerten oder beschichteten Rohrabschnitt, wobei die Ausmauerung bzw. Beschichtung aus einem gegen die "metal dusting"-Korrosion besonders widerstandsfähigen Werkstoff besteht. Auf diese Weise kann die "metal dusting"-Korrosion wirkungsvoll weiter reduziert werden, da insbesondere am Austritt für den Synthesegasproduktstrom das für diese Korrosionsart relevante Temperaturfenster durchlaufen wird. Wenn das Reformerrohr mit zwei oder mehr Wärmetauscherrohren ausgestattet ist, ist es günstig, wenn die Austritte der beiden Wärmetauscherrohre in eine entsprechend ausgemauerte oder beschichtete Sammelleitung einmünden.

Grundsätzlich kann das erfindungsgemäße Reformerrohr mit verschiedenen Feststoffkatalysatoren für die Dampfreformierung betrieben werden. Als besonders vorteilhaft hat sich die Verwendung nickelbasierter Katalysatoren gezeigt, die vom Handel bereitgestellt werden.

Eine bevorzugte Ausgestaltung des erfindungsgemäßen Reformerofens sieht vor, dass das verschlossene Rohrende des Reformerrohrs frei hängend in dem Ofeninnenraum angeordnet ist. Dies ist besonders günstig, da auf diese Weise thermisch-mechanische Spannungen zwischen dem Eintritt für den Einsatzgasstrom und dem Austritt für den Synthesegasproduktstrom vermieden werden, die aufgrund der beträchtlichen Temperaturunterschiede bei den aus dem Stand der Technik bekannten Reformerrohren entstehen. Bei letzteren werden daher aufwändige Maßnahmen, wie beispielsweise die Verwendung von Spannungskompensatoren (sog. Pigtails) oder von Seilzügen, eingesetzt, um die auftretenden Spannungen und deren negative Auswirkungen, beispielsweise eine Verformung des Reformerrohrs, zu kompensieren. Dies ist bei der hängenden Anordnung des Reformerrohrs nicht mehr notwendig.

In weiterer bevorzugter Ausgestaltung des Reformerofens ist vorgesehen, dass eine Vielzahl von Reformerrohren und Brennern in dem Ofeninnenraum angeordnet sind und dass die Längsachsen der durch die Brenner erzeugten Flammen parallel zu den Längsachsen der Reformerrohre ausgerichtet sind. Auf diese Weise kann sichergestellt werden, dass durch einen Brenner die um ihn angeordneten Reformerrohr gleichmäßig beheizt werden. Ferner wird den Reformerrohren durch die parallel verlaufenden Flammenachsen auf einer längeren Strecke Strahlungswärme zuzugeführt und eine lokale Überhitzung der Außenseiten der Reformerrohre vermieden.

### Ausführungs- und Zahlenbeispiele

Weiterbildungen, Vorteile und Anwendungsmöglichkeiten der Erfindung ergeben sich auch aus der nachfolgenden Beschreibung von Ausführungs- und Zahlenbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen
- Fig. 1: ein erstes nicht erfindungsgemäßes Beispiel eines Reformerrohres,
- Fig. 2: dasselbe Reformerrohr wie in Fig. 1 in stärker schematisierter Darstellung,
- Fig. 3: ein zweites nicht erfindungsgemäßes Beispiel eines Reformerrohres,
- Fig. 4: ein Reformerrohr gemäß einer bevorzugten Ausführungsform der Erfindung,
- Fig. 5: ein nicht erfindungsgemäßes Beispiel eines Reformerofen.

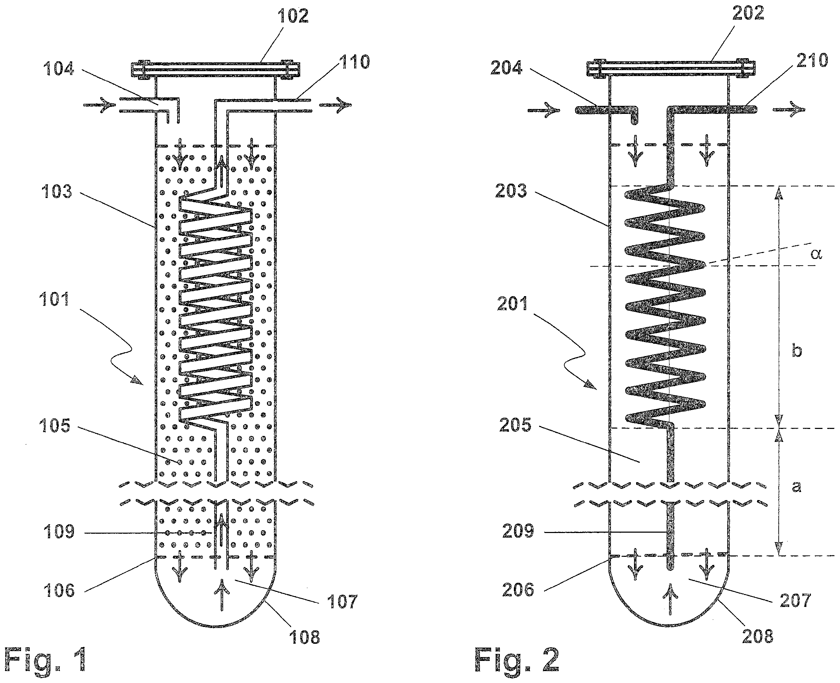

In dem in Fig. 1 schematisch dargestellten Reformerrohr 101 gemäß einem ersten Beispiel tritt entschwefeltes Erdgas gemeinsam mit Reformierungsdampf in das offene Rohrende 102 des äußeren Rohres 103 über die Eintrittsleitung 104 ein. Das äußere Rohr besteht aus einem Nickel-Chrom-Stahl, beispielsweise des Typs G-X45NiCrNbTi3525. Die Eintrittstemperatur des Einsatzgases beträgt 600 °C, die auf das Katalysatorvolumen bezogene Raumgeschwindigkeit beträgt typischerweise 4000 bis 5000 m_{N}³/(m³ h). Das Reformerrohr ist senkrecht mit dem offenen Rohrende in oberer Position angeordnet und wird von außen mittels Brennern beheizt (nicht dargestellt in Fig. 1). Das Erdgas und der Reformierungsdampf treten dann in die Katalysatorschüttung 105 ein, die aus Partikeln eines festen, nickelbasierten Reformie rungskatalysators gebildet wird. Die Katalysatorschüttung ist in Fig. 1 schematisch durch Punkte dargestellt und wird mittels eines Lochblechs 106 in dem äußeren Rohr fixiert. An dem Reformierungskatalysator findet die endotherme Dampfreformierungsreaktion statt. Das teilumgesetzte Erdgas, das neben Kohlenoxiden und Wasserstoff auch noch nicht umgesetztes Methan enthält, tritt nach Verlassen der Katalysatorschüttung in einen Freiraum 107 ein, der an dem verschlossenen Rohrende 108 des äußeren Rohres angeordnet und von der Katalysatorschüttung durch das Lochblech abgetrennt ist. Anschließend tritt der teilumgesetzte Einsatzgasstrom in das Eintrittsende des innerhalb der Katalysatorschüttung angeordneten Wärmetauscherrohres 109 ein, das aus einem gerade verlaufenden Anteil, gefolgt von einem gewendelten Anteil, besteht. Der durch das Wärmetauscherrohr strömende Gasstrom gibt einen Teil seiner fühlbaren Wärme im Gegenstrom an die Katalysatorschüttung und den durch sie strömenden Einsatzgasstrom ab. Der Wärmeaustausch ist dabei im gewendelten Anteil des Wärmetauscherrohres intensiver, da hier pro Volumenelement eine größere Wärmeaustauschfläche zur Verfügung steht. Das Wärmetauscherrohr besteht aus Werkstoffen mit guter Beständigkeit gegen "metal dusting"-Korrosion wie z.B. Alloy 601, 602 CA, 617, 690, 692, 693, HR 160, HR 214, Kupfer enthaltenen Legierungen oder sogenannte Mehrschichtmaterialien, bei denen die Rohre mit Zinn-Nickel- oder Aluminium-Nickel-Legierungen beschichtet sind. Nach Durchströmen des Wärmetauscherrohres tritt der Synthesegasproduktstrom am offenen Rohrende des äußeren Rohres über die Austrittsleitung 110 aus dem Reformerrohr aus und wird der weiteren Aufarbeitung zugeführt. Diese kann je nach Verwendungszweck des Synthesegasproduktes eine Kohlenmonoxid-Konvertierung, eine Gaswäsche zur Abtrennung von Kohlendioxid, eine Druckwechseladsorption zur Wasserstoffabtrennung sowie weitere Aufarbeitungsstufen umfassen.

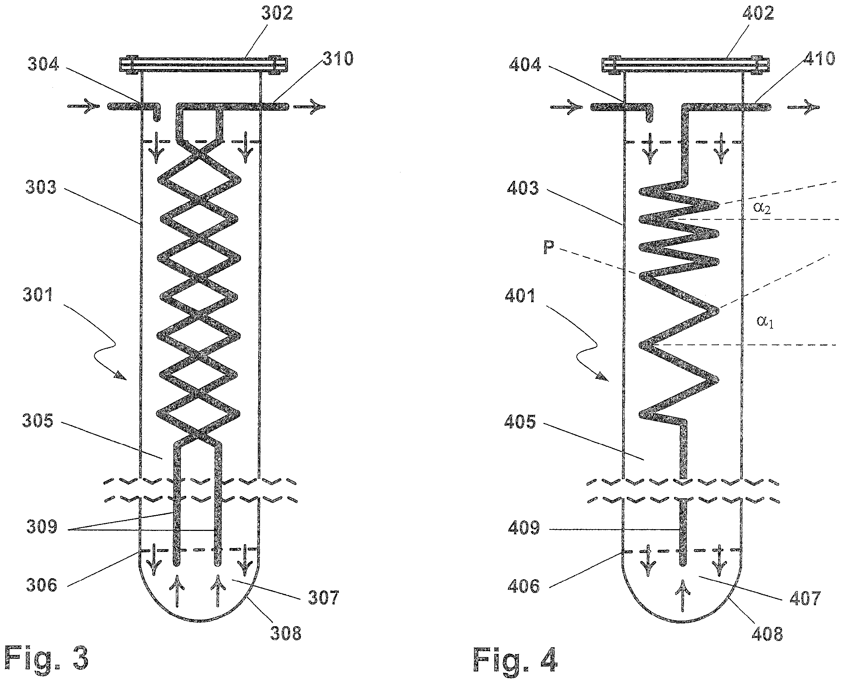

In Fig. 2 wurde dasselbe Reformerohr dargestellt wie in Fig. 1, allerdings in stärker schematisierter Weise, um einige Definitionen und geometrische Beziehungen zu verdeutlichen. Dabei entsprechen sich Bezugszeichen der Figuren 1 (10x, 1xx) und 2 (20x, 2xx) hinsichtlich der durch sie bezeichneten Elemente. Dasselbe gilt für die nachfolgenden Figuren 3 bis 5.

Der Längenabschnitt a des Wärmetauscherrohres 209 bezeichnet seinen geraden Anteil, der Längenabschnitt b den gewendelten Anteil jeweils innerhalb der Katalysatorschüttung. Unter der Wendelsteigung α wird der Winkel verstanden, der zwischen der Mittellinie des betrachteten Windungsabschnitts und einer Ebene eingeschlossen wird, die senkrecht zur Längsachse des gewendelten Anteils des Wärmetauscherrohres steht.

In Fig. 3 ist ein Reformerrohr gemäß einem zweiten Beispiel dargestellt, bei der zwei Wärmetauscherrohre 309 innerhalb der Katalysatorschüttung als Doppelhelix angeordnet sind. Beide Wärmetauscherrohre werden mittels des Lochblechs 306 fixiert und münden austrittsseitig in eine gemeinsame Sammelleitung, die mit der Austrittsleitung 310 verbunden ist, durch die der Synthesegasproduktstrom aus dem Reformerrohr austritt. Die Sammelleitung ist auf ihrer Innenseite mit einer keramischen Beschichtung versehen, die eine erhöhte Beständigkeit gegen die "metal dusting"-Korrosion aufweist.

Fig. 4 stellt ein Reformerrohr gemäß einer bevorzugten Ausführungsform der Erfindung dar, bei der der gewendelte Anteil des Wärmetauscherrohres in zwei Abschnitte mit unterschiedlicher Wendelsteigung α₁, α₂ zerfällt. Ab dem Punkt P geht die Wendelsteigung sprunghaft vom größeren Wert α₁ auf den kleineren α₂ Wert zurück. Obwohl nicht bildlich dargestellt, betrifft die Erfindung auch eine entsprechende Ausführungsform mit mehreren, bevorzugt zwei Wärmetauscherrohren, die in ihrem gewendelten Anteil unterschiedliche Wendelsteigungen aufweisen.

Ebenfalls nicht bildlich dargestellt, aber vorteilhaft ist auch eine Ausführungsform der Erfindung, bei der sich die Wendelsteigung stetig ändert, beispielsweise in Strömungsrichtung des durch das Wärmetauscherrohr strömenden Gases bis auf einen unteren Grenzwert abnimmt. Auf diese Weise werden die spezifischen, an unterschiedlichen Stellen der Katalysatorschüttung verschiedenen Wärmebedarfe der Dampfreformierungsreaktion besonders gut angenähert.

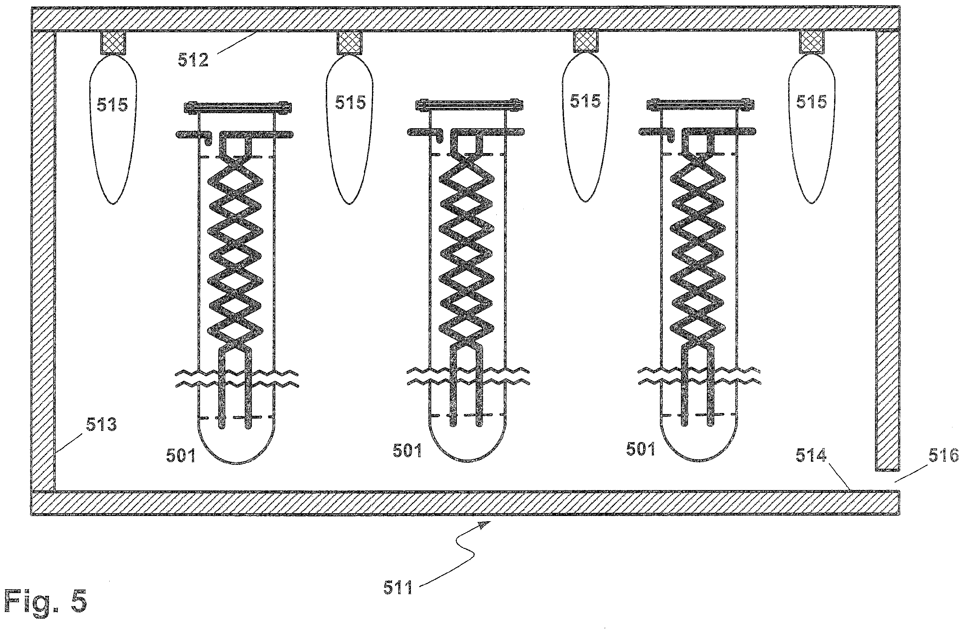

Fig. 5 zeigt schematisch einen Reformerofen 511 mit Reformerrohren 501. Die Reformerrohre sind frei hängend in dem Reformerofen angeordnet, wobei die offenen Rohrenden der Reformerrohre mit der Decke 512 des Reformerofens oder einer oder mehreren Seitenwänden 513 mechanisch verbunden sind (nicht dargestellt in Fig. 5). Keine mechanische Verbindung besteht dagegen zwischen den verschlossenen Rohrenden der Reformerrohre und dem Boden 514 des Reformerofens. Der Reformerofen wird mittels Brennern 515 beheizt, wobei die Längsachsen der durch die Brenner erzeugten Flammen parallel zu den Längsachsen der Reformerrohre ausgerichtet sind. Die Brennerrauchgase verlassen den Reformerofen über die Austrittsöffnung 516 und werden auf dem Fachmann bekannte Weise weiterbehandelt.

### Zahlenbeispiele

In der nachfolgenden Tabelle werden zwei Beispiele A und B eines nicht erfindungsgemäßen Reformerrohrs mit einem Vergleichsbeispiel verglichen. Alle betrachteten Reformerrohre weisen einen Innendurchmesser des äußeren Rohres von 125 mm auf und enthalten jeweils zwei in die Katalysatorschüttung eingebettete Wärmetauscherrohre. Der Außendurchmesser des gewendelten Anteils der Wärmetauscherrohre beträgt 117 mm, woraus sich ein Abstand von rund 4 mm zur Innenseite des äußeren Rohres ergibt. Das Verhältnis der Länge des geraden Anteils des Wärmetauscherrohres a zur Gesamtlänge des Wärmetauscherrohres a + b (zur Definition s. Fig. 2) beträgt beim Vergleichsbeispiel 7 %, bei den Ausführungsformen A und B dagegen 19 % und 50 %.

| | Vergleichsbeispiel | Fall A | Fall B |
|---|---|---|---|
| gerader Anteil Wärmetauscherrohr a/(a+b) | 7% | 19% | 50% |
| | | | |

| Bedingungen Eintritt Reformerrohr | | | |
|---|---|---|---|
| Temperatur / °C | 600 | 600 | 600 |
| Druck / bar, absolut | 27,9 | 27,9 | 27,9 |

| Bedingungen Eintritt Wärmetauscherrohr | | | |
|---|---|---|---|
| Temperatur / °C | 890 | 890 | 890 |
| | | | |
| Relativer Druckverlust über Reformerrohr bezogen auf Vergleichsbsp. / % | 100 | 89 | 70 |
| Relative übertragende Wärmemenge bezogen auf Vergleichsbsp. / % | 100 | 95 | 81 |

Wie die in der Tabelle dargestellten Fälle zeigen, kann durch Variation des geraden Anteils des Wärmetauscherrohres in Bezug auf das Vergleichsbeispiel, bei dem der gerade Anteil des Wärmetauscherrohres lediglich 7 % beträgt, der Druckverlust über das Reformerrohr und der Wärmestrom zur Katalysatorschüttung den Erfordernissen angepasst werden. Beispielsweise kann der Druckverlust um 11 % und der Wärmestrom zur Katalysatorschüttung um 5 % gesenkt werden, indem der gerade Anteil des Wärmetauscherrohres von 7 % auf 19 % erhöht wird. Bei weiterer Erhöhung des geraden Anteils des Wärmetauscherrohres von 7 % auf 50 % wird der Druckverlust sogar um 30 % reduziert, während der Wärmestrom zur Katalysatorschüttung um 19 % absinkt. Dabei überrascht, dass bei gegebener Abnahme des Druckverlustes die Abnahme des Wärmestroms zur Katalysatorschüttung in unterproportionaler Weise erfolgt, so
dass für die jeweiligen Randbedingungen ein Reformerrohr bestimmt werden kann, das immer noch gute Wärmeaustauscheigenschaften bei deutlich verringertem Druckverlust aufweist. Dies wird mit der Erfindung durch die durch geeignete Wahl der Wendelsteigung ermöglicht.

### Gewerbliche Anwendbarkeit

Mit der Erfindung wird ein Reformerrohr vorgeschlagen, das einen internen Wärmeaustausch zwischen dem Einsatzgas und dem zu Synthesegasprodukten teilumgesetzten Produktgas ermöglicht, wodurch sich Vorteile hinsichtlich des Energieverbrauchs bei der Verwendung des Reformerrohres ergeben. Durch die erfindungsgemäße geeignete Wahl der Wendelsteigung, die sich innerhalb des gewendelten Anteils einmal oder mehrfach ändern kann, kann das Reformerrohr auf flexible Weise den äußeren Bedingungen des Verfahrens angepasst werden. Insbesondere wird es mit der Erfindung ermöglicht, der "metal dusting"-Korrosion wirkungsvoll gegenzusteuern.

### Bezugszeichenliste

- [101], [201], [301], [401], [501]: Reformerrohr
- [102], [202], [302], [402], [502]: offenes Rohrende
- [103], [203], [303], [403], [503]: äußeres Rohr
- [104], [204], [304], [404], [504]: Eintrittsleitung
- [105], [205], [305], [405], [505]: Katalysatorschüttung
- [106], [206], [306], [406], [506]: Lochblech
- [107], [207], [307], [407], [507]: Freiraum
- [108], [208], [308], [408], [508]: verschlossenes Rohrende
- [109], [209], [309], [409], [509]: Wärmetauscherrohr
- [110], [210], [310], [410], [510]: Austrittsleitung
- [511]: Reformerofen
- [512]: Decke
- [513]: Seitenwand
- [514]: Boden
- [515]: Brenner
- [516]: Austrittsöffnung

## Patentansprüche

1. Reformerrohr (401) zur Umwandlung kohlenwasserstoffhaltiger Einsatzstoffe, vorzugsweise Erdgas, in ein Kohlenoxide und Wasserstoff enthaltendes Synthesegasprodukt unter Dampfreformierungsbedingungen, umfassend
(a) ein äußeres, an einem Rohrende (402) offenes und an dem entgegengesetzten Rohrende (408) verschlossenes Rohr (403), wobei das äußere Rohr (403) eine Schüttung (405) eines für die Dampfreformierung aktiven, festen Katalysators enthält und von außen beheizt wird,
(b) einen Eintritt (404) für den den Einsatzstoff enthaltenden Einsatzgasstrom, wobei der Eintritt (404) des Einsatzgasstroms an dem offenen Rohrende (402) angeordnet ist und in Fluidverbindung mit der Katalysatorschüttung (405) steht,
(c) mindestens ein helixförmig gewendeltes, innerhalb der Katalysatorschüttung (405) angeordnetes Wärmetauscherrohr (409), dessen Eintrittsende in Fluidverbindung mit der Katalysatorschüttung (405) steht und dessen Austrittsende in Fluidverbindung mit dem Austritt (410) für den Synthesegasproduktstrom steht, wobei das Wärmetauscherrohr (409) in Wärmeaustauschbeziehung mit der Katalysatorschüttung (405) und dem durch sie strömenden Einsatzgasstrom steht,
(d) einen Austritt (410,) für den Synthesegasproduktstrom, wobei der Austritt (410) an dem offenen Rohrende (402) angeordnet ist und in Fluidverbindung mit dem Austrittsende des Wärmetauscherrohres (409), aber nicht in Fluidverbindung mit dem Eintritt (404) für den Einsatzgasstrom steht,
wobei der Einsatzgasstrom zunächst die Katalysatorschüttung (405) und nachfolgend im Gegenstrom das Wärmetauscherrohr (409) durchströmt, **dadurch gekennzeichnet, dass**
das Wärmetauscherrohr auf einem Teil seiner innerhalb der Katalysatorschüttung befindlichen Länge gewendelt ist, sich die Wendelsteigung innerhalb der Katalysatorschüttung (405) ändert, dass der gewendelte Anteil des Wärmetauscherrohres (409) in der Nähe des Austrittsendes des Wärmetauscherrohres (409) angeordnet ist und dass die Wendelsteigung des Wärmetauscherrohres (409) zum Austrittsende des Wärmetauscherrohres (409) hin abnimmt.

2. Reformerrohr (401) gemäß Anspruch 1,
**dadurch gekennzeichnet, dass**
das Wärmetauscherrohr (409) auf einem Teil seiner innerhalb der Katalysatorschüttung (405) befindlichen Länge gewendelt ist und ansonsten gerade verläuft.

3. Reformerrohr (401) gemäß einem der vorigen Ansprüche,
**dadurch gekennzeichnet, dass**
der gewendelte Anteil des Wärmetauscherrohres (409) und/oder die Änderung der Wendelsteigung innerhalb der Katalysatorschüttung (405) so gewählt wird, dass bei festgelegtem Einsatzgasstrom und Temperatur des Einsatzgases am Eintritt (404) die Austrittstemperatur oberhalb des für die Metallkorrosion durch "metal dusting" aktiven Temperaturbereichs liegt.

4. Reformerrohr (401) gemäß Anspruch 1 oder 2 ,
**dadurch gekennzeichnet, dass**
der gewendelte Anteil des Wärmetauscherrohres (409) und/oder die Änderung der Wendelsteigung innerhalb der Katalysatorschüttung (405) so gewählt wird, dass bei festgelegtem Einsatzgasstrom und Temperatur des Einsatzgases am Eintritt (404) der Druckverlust zwischen Eintritt (104, 204, 304, 404, 504) und Austritt (410) unter einem festgelegten Höchstwert liegt.

5. Reformerrohr (401) gemäß einem der vorigen Ansprüche,
**dadurch gekennzeichnet, dass**
das Wärmetauscherrohr (409) auf einem Anteil von höchstens 90 % seiner innerhalb der Katalysatorschüttung (405) befindlichen Länge gewendelt ist.

6. Reformerrohr (401) gemäß einem der vorigen Ansprüche,
**gekennzeichnet durch**
einen innerhalb des äußeren Rohrs (403) an dem verschlossenen Rohrende (408) angeordneten Freiraum (407), der von der Katalysatorschüttung (405) durch eine gasdurchlässige Trennvorrichtung abgetrennt ist, wobei in den Freiraum (407) das Eintrittsende mindestens eines Wärmetauscherrohres (409) hineinragt und wobei der Freiraum (407) in Fluidverbindung mit der Katalysatorschüttung (405) und dem Wärmetauscherrohr (409) steht.

7. Reformerrohr (401) gemäß einem der vorigen Ansprüche,
**dadurch gekennzeichnet, dass**
zwei Wärmetauscherrohre (409) vorhanden sind.

8. Reformerrohr (401) gemäß einem der vorigen Ansprüche,
**dadurch gekennzeichnet, dass**
der für die Dampfreformierung aktive, feste Katalysator Nickel enthält.

9. Reformerrohr (401) gemäß einem der vorigen Ansprüche,
**dadurch gekennzeichnet, dass**
das Austrittsende des Wärmetauscherrohres (409) in einen ausgemauerten oder beschichteten Rohrabschnitt mündet, wobei die Ausmauerung oder Beschichtung aus einem gegen die "metal dusting"-Korrosion besonders widerstandsfähigen Werkstoff besteht.

10. Reformerofen (511), umfassend feuerfest ausgekleidete oder feuerfest zugestellte Wände (513), eine Decke (512) und einen Boden (514) und einen dadurch gebildeten Innenraum,
**dadurch gekennzeichnet, dass**
mindestens ein Reformerrohr (401) gemäß Anspruch 1 bis 9 und mindestens ein Brenner (515) zur Beheizung des Reformerrohrs (401) in dem Innenraum oder in einem mit dem Innenraum bezüglich der Brennerrauchgase in Fluidverbindung stehenden Nebenraum angeordnet sind.

11. Reformerofen (511) gemäß Anspruch 10,
**dadurch gekennzeichnet, dass**
das verschlossene Rohrende (408) frei hängend in dem Innenraum angeordnet ist.

12. Reformerofen (511) gemäß Anspruch 10 oder 11,
**dadurch gekennzeichnet, dass**
eine Vielzahl von Reformerrohren (401) und Brennern (515) in dem Innenraum angeordnet sind und dass die Längsachsen der durch die Brenner (515) erzeugten Flammen parallel zu den Längsachsen der Reformerrohre (401) ausgerichtet sind.

13. Verfahren zur Herstellung von Synthesegas durch katalytisches Dampfreformieren kohlenwasserstoffhaltiger Einsatzstoffe, bevorzugt Erdgas, unter Dampfreformierungsbedingungen in Gegenwart eines für die Dampfreformierung aktiven, festen Katalysators, umfassend folgende Schritte:
(a) Bereitstellen eines den Einsatzstoff enthaltenden Einsatzgasstroms und Zugabe von Reformierungsdampf,
(b) Katalytisches Umsetzen des Einsatzstoffes unter Dampfreformierungsbedingungen zu einem Kohlenoxide und Wasserstoff enthaltenden Synthesegasprodukt,
(c) Ausleiten und optional Aufarbeiten des Synthesegasprodukts,
**dadurch gekennzeichnet, dass**
das katalytische Umsetzen in Schritt (b) in einem Reformerrohr (401) nach Anspruch 1 bis 9 erfolgt.

## Claims

1. A reformer tube (401) for converting hydrocarbon-containing feedstock, preferably natural gas, into a syngas product containing carbon monoxides and hydrogen under steam reforming conditions, comprising
(a) an outer tube (403) that is open at one tube end (402) and closed at the opposite tube end (408), the outer tube (403) containing a bed (405) of a solid catalyst that is active for steam reforming and being heated from the outside,
(b) an inlet (404) for the feed gas flow containing the feedstock, the inlet (404) for the feed gas flow being arranged at the open tube end (402) and being in fluid communication with the catalyst bed (405),
(c) at least one helically coiled heat exchanger tube (409) arranged inside the catalyst bed (405), the inlet end of which tube is in fluid communication with the catalyst bed (405) and the outlet end is in fluid communication with the outlet (410) for the syngas product flow, the heat exchanger tube (409) being in heat-exchanging communication with the catalyst bed (405) and the feed gas flowing therethrough,
(d) an outlet (410) for the syngas product flow, the outlet (410) being arranged at the open tube end (402) and being in fluid communication with the outlet end of the heat exchanger tube (409), but not in fluid communication with the inlet (404) for the feed gas flow,
the feed gas flow first flowing through the catalyst bed (405) and then through the heat exchanger tube (409) in counterflow,
**characterized in that**
the heat exchanger tube is coiled over part of its length that is within the catalyst bed, with the coil pitch changing within the catalyst bed (405), **in that** the coiled part of the heat exchanger tube (409) is arranged in the vicinity of the outlet end of the heat exchanger tube (409) and **in that** the coil pitch of the heat exchanger tube (409) decreases towards the outlet end of the heat exchanger tube (409).

2. The reformer tube (401) according to claim 1, **characterized in that** the heat exchanger tube (409) is coiled over part of its length that is within the catalyst bed (405), and is otherwise straight.

3. The reformer tube (401) according to any of the preceding claims, **characterized in that** the coiled part of the heat exchanger tube (409) and/or the change in the coil pitch within the catalyst bed (405) is selected such that, when the feed gas flow and the temperature of the feed gas at the inlet (404) are set, the outlet temperature is above the temperature range that is active for metal corrosion by metal dusting.

4. The reformer tube (401) according to either claim 1 or claim 2, **characterized in that** the coiled part of the heat exchanger tube (409) and/or the change in the coil pitch within the catalyst bed (405) is selected such that, when the feed gas flow and the temperature of the feed gas at the inlet (404) are set, the pressure loss between the inlet (104, 204, 304, 404, 504) and the outlet (410) is below a set maximum value.

5. The reformer tube (401) according to any of the preceding claims, **characterized in that** the heat exchanger tube (409) is coiled over a proportion of at most 90% of its length that is within the catalyst bed (405).

6. The reformer tube (401) according to any of the preceding claims, **characterized by** a space (407) that is arranged inside the outer tube (403) at the closed tube end (408) and is separated from the catalyst bed (405) by a gas-permeable separator, the inlet end of at least one heat exchanger tube (409) projecting into the space (407) and the space (407) being in fluid communication with the catalyst bed (405) and the heat exchanger tube (409).

7. The reformer tube (401) according to any of the preceding claims, **characterized in that** two heat exchanger tubes (409) are provided.

8. The reformer tube (401) according to any of the preceding claims, **characterized in that** the solid catalyst that is active for steam reforming contains nickel.

9. The reformer tube (401) according to any of the preceding claims, **characterized in that** the outlet end of the heat exchanger tube (409) opens into a brick-lined or coated tube portion, the brick lining or coating consisting of a material that is particularly resistant to metal dusting corrosion.

10. A reformer furnace (511), comprising walls (513) that are cladded or lined with fire-resistant material, a ceiling (512) and a floor (514), and an interior space formed therein, **characterized in that**
at least one reformer tube (401) according to claims 1 to 9 and at least one burner (515) for heating the reformer tube (401) are arranged in the interior space or in an adjoining space that is in fluid communication with the interior space in respect of the burner fumes.

11. The reformer furnace (511) according to claim 10, **characterized in that** the closed tube end (408) is arranged so as to hang freely in the interior space.

12. The reformer furnace (511) according to either claim 10 or claim 11, **characterized in that** a plurality of reformer tubes (401) and burners (515) are arranged in the interior space, and **in that** the longitudinal axes of the flames generated by the burners (515) are oriented in parallel with the longitudinal axes of the reformer tubes (401).

13. A method for producing syngas by the catalytic steam reforming of hydrocarbon-containing feedstock, preferably natural gas, under steam reforming conditions in the presence of a solid catalyst that is active for steam reforming, comprising the steps of:
(a) providing a feed gas flow containing the feed gas, and adding reforming steam,
(b) catalytically converting the feedstock under steam reforming conditions to form a syngas product containing carbon monoxides and hydrogen,
(c) discharging and optionally processing the syngas product,
**characterized in that**
the catalytic conversion in step (b) is carried out in a reformer tube (401) according to claims 1 to 9.

## Revendications

1. Tube de reformage (401) servant à transformer des matières de charge contenant des hydrocarbures, de préférence du gaz naturel, en produit de gaz de synthèse contenant des oxydes de carbone et de l'hydrogène dans des conditions de reformage à la vapeur, le tube de reformage comprenant
(a) un tube extérieur (403) ouvert à une extrémité de tube (402) et fermé à l'extrémité de tube opposée (408), le tube extérieur (403) contenant un lit (405) d'un catalyseur solide actif pour le reformage à la vapeur et étant chauffé depuis l'extérieur,
(b) une entrée (404) destinée à un flux de gaz de charge contenant la matière de charge, l'entrée (404) du flux de gaz de charge étant disposée à l'extrémité de tube ouverte (402) et étant en communication fluidique avec le lit de catalyseur (405),
(c) au moins un tube échangeur de chaleur (409) qui est enroulé en hélice, qui est disposé dans le lit de catalyseur (405), dont l'extrémité d'entrée est en communication fluidique avec le lit de catalyseur (405) et dont l'extrémité de sortie est en communication fluidique avec la sortie (410) destinée au flux de produit de gaz de synthèse, le tube échangeur de chaleur (409) étant en relation d'échange de chaleur avec le lit de catalyseur (405) et le flux de gaz de charge circulant à travers celui-ci,
(d) une sortie (410) destinée au flux de produit de gaz de synthèse, la sortie (410) étant disposée à l'extrémité de tube ouverte (402) et étant en communication fluidique avec l'extrémité de sortie du tube échangeur de chaleur (409), mais n'étant pas en communication fluidique avec l'entrée (404) destinée au flux de gaz de charge,
le flux de gaz de charge s'écoulant d'abord à travers le lit de catalyseur (405) puis à contre-courant à travers le tube échangeur de chaleur (409),
**caractérisé en ce que**
le tube échangeur de chaleur est enroulé sur une partie de sa longueur se trouvant à l'intérieur du lit de catalyseur, **en ce que** le pas de l'hélice varie à l'intérieur du lit de catalyseur (405), **en ce que** la partie enroulée du tube échangeur de chaleur (409) est disposée à proximité de l'extrémité de sortie du tube échangeur de chaleur (409) et **en ce que** le pas de l'hélice du tube échangeur de chaleur (409) diminue en direction de l'extrémité de sortie du tube échangeur de chaleur (409).

2. Tube de reformage (401) selon la revendication 1,
**caractérisé en ce que**
le tube échangeur de chaleur (409) est enroulé sur une partie de sa longueur se trouvant à l'intérieur du lit de catalyseur (405) et s'étend par ailleurs de manière rectiligne.

3. Tube de reformage (401) selon l'une des revendications précédentes,
**caractérisé en ce que**
la partie enroulée du tube échangeur de chaleur (409) et/ou la variation du pas de l'hélice à l'intérieur du lit de catalyseur (405) est choisie de telle sorte que, pour un flux de gaz de charge fixe et une température fixe du gaz de charge à l'entrée (404), la température de sortie est située au-dessus de la gamme de températures active pour la corrosion du métal due à la « formation de poussières métalliques » (metal dusting).

4. Tube de reformage (401) selon la revendication 1 ou 2,
**caractérisé en ce que**
la partie enroulée du tube échangeur de chaleur (409) et/ou la variation du pas de l'hélice à l'intérieur du lit de catalyseur (405) est choisie de telle sorte que, pour un flux de gaz de charge fixe et une température fixe du gaz de charge à l'entrée (404), la perte de pression entre l'entrée (104, 204, 304, 404, 504) et la sortie (410) est inférieure à une valeur maximale spécifiée.

5. Tube de reformage (401) selon l'une des revendications précédentes,
**caractérisé en ce que**
le tube échangeur de chaleur (409) est enroulé sur plus de 90 % de sa longueur se trouvant à l'intérieur du lit de catalyseur (405).

6. Tube de reformage (401) selon l'une des revendications précédentes,
**caractérisé par**
un espace libre (407) qui est disposé à l'intérieur du tube extérieur (403) à l'extrémité de tube fermée (408) et qui est séparé du lit de catalyseur (405) par un dispositif de séparation perméable aux gaz, l'extrémité d'entrée d'au moins un tube échangeur de chaleur (409) faisant saillie dans l'espace libre (407) et l'espace libre (407) étant en communication fluidique avec le lit de catalyseur (405) et le tube échangeur de chaleur (409).

7. Tube de reformage (401) selon l'une des revendications précédentes, **caractérisé en ce que** deux tubes échangeurs de chaleur (409) sont présents.

8. Tube de reformage (401) selon l'une des revendications précédentes, **caractérisé en ce que** le catalyseur solide actif pour le reformage à la vapeur contient du nickel.

9. Tube de reformage (401) selon l'une des revendications précédentes,
**caractérisé en ce que**
l'extrémité de sortie du tube échangeur de chaleur (409) débouche dans une portion de tube pourvue d'un chemisage ou d'un revêtement, le chemisage ou le revêtement étant constitué d'un matériau résistant en particulier à une corrosion due à la « formation de poussières métalliques » (metal dusting).

10. Four de reformage (511) comprenant des parois (513) réfractaires ou pourvue d'un revêtement réfractaire, un plafond (512) et un plancher (514), et un espace intérieur formé par ceux-ci ;
**caractérisé en ce que**
au moins un tube de reformage (401) selon les revendications 1 à 9 et au moins un brûleur (515) servant à chauffer le tube de reformage (401) sont disposés dans l'espace intérieur ou dans un espace annexe en communication fluidique avec l'espace intérieur en ce qui concerne les gaz de fumée du brûleur.

11. Four de reformage (511) selon la revendication 10,
**caractérisé en ce que**
l'extrémité de tube fermée (408) est disposée de manière à être suspendue librement dans l'espace intérieur.

12. Four de reformage (511) selon la revendication 10 ou 11,
**caractérisé en ce que**
un grand nombre de tubes de reformage (401) et de brûleurs (515) sont disposés dans l'espace intérieur et **en ce que** les axes longitudinaux des flammes générées par les brûleurs (515) sont alignés parallèlement aux axes longitudinaux des tubes de reformage (401).

13. Procédé de production de gaz de synthèse par reformage catalytique à la vapeur de matières de charge contenant des hydrocarbures, de préférence du gaz naturel, dans des conditions de reformage à la vapeur en présence d'un catalyseur solide actif pour le reformage à la vapeur, le procédé comprenant les étapes suivantes :
(a) fournir un flux de gaz de charge contenant la matière de charge et ajouter la vapeur de reformage,
(b) transformer catalytiquement la matière de charge dans des conditions de reformage à la vapeur en un produit de gaz de synthèse contenant des oxydes de carbone et de l'hydrogène,
(c) évacuer et éventuellement traiter le produit de gaz de synthèse,
**caractérisé en ce que**
la transformation catalytique de l'étape (b) s'opère dans un tube de reformage (401) selon les revendications 1 à 9.
